# EUROPÄISCHE PATENTSCHRIFT

(11) **EP 3 886 278 B1**
(45) Veröffentlichungstag und Bekanntmachung des Hinweises auf die Patenterteilung: **24.12.2025**
(21) Anmeldenummer: 21163085.0
(22) Anmeldetag: 17.03.2021
(51) Int. Cl.: H02G 3/08, H02G 3/12

(54) **INSTALLATIONSDOSE**
INSTALLATION BOX
BOÎTE D'INSTALLATION

(30) Priorität: 26.03.2020 DE 202020101620 U
(43) Veröffentlichungstag der Anmeldung: 29.09.2021
(73) Patentinhaber: OBO Bettermann Hungary Kft., 2347 Bugyi (HU)
(72) Erfinder: Harms, Heiko, 58708 Menden (DE)
(74) Vertreter: Haverkamp Patentanwälte PartG mbB

(56) Entgegenhaltungen:
- EP-A1- 3 540 885
- EP-A1- 3 731 358
- EP-A2- 2 360 800
- CH-B1- 699 724
- US-A- 3 873 759

## Beschreibung

Die Erfindung betrifft eine Installationsdose für elektrische und/oder elektronische Installationen mit den Merkmalen des Oberbegriffs des Anspruchs 1.

Installationsdosen werden für die Installation von elektrischen und/oder elektronischen Geräten in Gebäuden eingesetzt. Bei derartigen Installationsdosen handelt es sich typischerweise um Hohlwanddosen, mithin um Installationsdosen, die unter Putz montiert werden. Derartige Installationsdosen verfügen über einen Dosenkörper, der durch einen Boden, eine umlaufende Wand und eine dem Boden gegenüberliegende Montageöffnung gebildet ist. Die Montageöffnung stellt diejenige Öffnung des Dosenkörpers dar, durch die die elektrischen/elektronischen Geräte darin eingesetzt werden. Auch wird über die Montageöffnung die Verkabelung innerhalb der Installationsdose und somit zu den von dieser abgehenden Leitungen vorgenommen. Als elektrische/elektronische Installationsgeräte kommen Steckdosen, Geräteträger, elektrische/elektronische Schaltgeräte, wie beispielsweise Dimmer oder dergleichen in Frage. An den Dosenkörper ist an seinen die Montageöffnung einfassenden Wandabschnitt ein in radialer Richtung nach außen vorspringender Stützflansch angeformt. Dieser dient zur Begrenzung der Einsetztiefe der Hohlwanddose, wenn diese in ein in eine Gebäudewand angebrachtes Dosenloch eingesetzt wird. Festgesetzt wird eine solche als Hohlwanddose ausgeführte Installationsdose in der wandseitigen Dosenöffnung mittels in radialer Richtung ausstellbarer Klemmkörper.

In dem Dosenkörper der Installationsdose sind typischerweise an ungekrümmten Abschnitten derselben Installationsöffnungen vorgesehen. Diese dienen zum Einführen eines Verbindungsrohrstückes typischerweise vom Dosenkörperinneren her, um eine erste Installationsdose mit einer zweiten unter Bereitstellung eines Verbindungstunnels miteinander zu verbinden. Das Verbindungsrohrstück verfügt über einen Anschlagflansch, mit dem dieser an dem Lochrandbereich der Installationsöffnung anliegt, wenn das Verbindungsrohrstück weit genug durch die Installationsöffnung hindurchgeführt ist.

Derartige als Hohlwanddosen ausgelegte Installationsdosen werden auch in Trockenbauwänden verbaut. Bei einem solchen Anwendungsfall ist vielfach gefordert, dass die durch die Wand bereitgestellte Winddichtigkeit zwischen zwei Räumen oder sogar zur Außenhaut des Gebäudes durch den Einbau von derartigen Installationsdosen, wenn diese von gegenüberliegenden Seiten in eine solche Trockenbauwand eingesetzt werden, nicht nachteilig beeinflusst wird. Bei Installationsdosen, bei denen es nicht auf eine Wind- und Rauchdichtigkeit ankommt, können die Installationsöffnungen durch Ausbrechteile vorbereitet sein. Bei diesen Ausbrechteilen handelt es sich um Kunststoffteile aus demselben Material wie der Dosenkörper selbst, und zwar Hartkunststoff, die mit Abbrechstegen mit dem eine solche Installationsöffnung umgebenden Material des Dosenkörpers verbunden sind. Je nach Bedarf werden dann die erforderlichen Installationsöffnungen durch Ausbrechen eines solchen Ausbrechteils geöffnet. Bei winddicht ausgeführten Installationsdosen ist jede Installationsöffnung mit einer Weichkunststoffmembran verschlossen.

Eine solche Installationsdose verfügt in aller Regel des Weiteren über Rohreinführungen zum Ein- bzw. Herausführen von Leitungen in den durch den Dosenkörper bereitgestellten Installationshohlraum hinein bzw. aus diesem heraus. Diese Öffnungen dienen zum Anschließen von Installationsrohren, beispielsweise Kunststoffwellschläuchen, in denen ein oder mehrere Kabel geführt sind. Die vorbeschriebenen Installationsöffnungen können ebenfalls bei Bedarf als Rohreinführung genutzt werden.

Zum Öffnen einer solchen Installationsöffnung wird die Weichkunststoffmembran entfernt. Sind zwei Installationsdosen mit einem Verbindungsrohrstück zu verbinden, wird dieses in aller Regel vorgenommen, bevor eine solche aus den beiden Installationsdosen gebildete Doppeldose wand- oder deckenseitig montiert wird. Zum Entfernen der Weichkunststoffmembran ist an diese außenseitig eine Öffnungshandhabe angeformt. Die Öffnungshandhabe verfügt über eine Öffnungslasche als Handhabungslasche. Zum Entfernen der Weichkunststoffmembran wird diese erfasst und die Weichkunststoffmembran dann vom Dosenkörper abgerissen, bevor das Verbindungsrohrstück durch die dann nicht mehr verschlossene Installationsöffnung hindurchgesteckt wird. Eine solche Installationsdose ist aus CH 699 724 B1 bekannt.

Bei der aus CH 699 724 B1 bekannten Installationsdose wird die als Lasche ausgebildete Öffnungshandhabe durch eine Materialbrücke im Zwickel angrenzend an den Anformungsbereich derselben an die Weichkunststoffmembran in ihrer gegenüber der Ebene der Weichkunststoffmembran abgewickelten Stellung gehalten.

Geöffnet wird die Installationsöffnung des Dosenkörpers durch Auf- bzw. Abreißen der Weichkunststoffmembran von dem Dosenkörper zumindest in demjenigen Bereich, mit dem die Weichkunststoffmembran die Installationsöffnung überspannt. Nicht immer gelingt es jedoch, dass mit der Öffnungshandhabe die Weichkunststoffmembran sauber von der Installationsöffnung entfernt wird. Dabei kann es vorkommen, dass Weichkunststoffmembranreste an der Einfassung der Installationsöffnung verbleiben. Sollen diese entfernt werden, was typischerweise gewünscht wird, kann dieses in einem zweiten Schritt durch Abreißen der verbliebenen Weichkunststoffmembranreste erfolgen oder diese werden mit einem Messer herausgeschnitten. Bei der aus CH 699 724 B1 vorbekannten Installationsdose dient eine durch eine Materialschwächung bereitgestellte Solleinreißstelle in der Weichkunststoffmembran dem Zweck eines sauberen Heraustrennens der Weichkunststoffmembran zum Öffnen der Installationsöffnung.

In EP 3 540 885 A1 ist eine Installationsdose beschrieben, bei der die Weichkunststoffmembran ebenfalls eine Öffnungslasche außenseitig trägt. Die Ebene der Öffnungslasche verläuft rechtwinklig zur Ebene der Weichstoffmembran. Zum definierten Bereitstellen einer Öffnung in der die Installationsöffnung überspannenden Weichkunststoffmembran befindet sich zwischen dem herauszutrennenden Flächenbereich der Weichkunststoffmembran und dem angrenzenden Flächenbereich eine Dünnstelle als Solleinreißstelle. Diese umlaufende Solleinreißstelle ist zum Verhindern eines Einreißens der Weichkunststoffmembran beim Heraustrennen des Öffnungsteils durch einen materialverstärkenden Wulst eingefasst.

US 3 873 759 offenbart eine Ausbrechöffnung aus einer Installationsdose. Die Ausbrechöffnung ist bei diesem Stand der Technik nicht von einer Weichkunststoffmembran überspannt. Eine weitere Installationsdose dieser Art ist aus EP 2 360 800 A2 bekannt. Der Ausbrechbutzen trägt außenseitig eine Werkzeugaufnahme. Zum Herausbrechen des Ausbrechbutzens kann in diese die Klinge eines Schraubendrehers eingesetzt werden. Über Verstärkungsstrukturen wird die Öffnungskraft über die Fläche des Ausbrechbutzens verteilt.

EP 3 731 558 A1 offenbart als nachveröffentlichter Stand der Technik eine Installationsdose mit einer an eine Weichkunststoffmembran angeformten Öffnungshandhabe, angeformt an der zur Doseninnenseite weisenden Seite der Weichkunststoffmembran. Diese dient zum Öffnen oder Entfernen der Weichkunststoffmembran vom Doseninneren her.

Ausgehend von dem diskutierten Stand der Technik gemäß CH 699 724 B1 liegt der Erfindung daher die Aufgabe zu Grunde, eine solche Installationsdose dergestalt weiterzubilden, dass das Entfernen der Weichkunststoffmembran zumindest desjenigen Bereiches derselben, mit der die Installationsöffnung verschlossen ist, zu verbessern.

Gelöst wird diese Aufgabe erfindungsgemäß durch eine Installationsdose mit den Merkmalen des Anspruchs 1.

Bei dieser Installationsdose trägt die Weichkunststoffmembran eine Öffnungshandhabe, die gemeinsam mit der Kunststoffmembran über eine gewisse Erstreckung in Richtung ihrer Längserstreckung einen Wurzelbereich bildet. Dieser Wurzelbereich ist außermittig zu der Kontur der von der Weichkunststoffmembran überspannten Installationsöffnung angeordnet. Die von der Öffnungshandhabe wegweisenden, außenseitigen Ränder des Wurzelbereiches folgen der Kontur der Installationsöffnung. Typischerweise befindet sich der Wurzelbereich in unmittelbarer Nachbarschaft zu der inneren Mantelfläche der Installationsöffnung. Der zwischen dem Wurzelbereich und der Einfassung der Installationsöffnung, bereitgestellt durch den Dosenkörper, befindliche Abschnitt dient als Solleinreißkontur. In Längserstreckung der Öffnungshandhabe erstreckt sich der Wurzelbereich typischerweise zumindest über 20 bis 25 % des von der Weichkunststoffmembran überspannten Durchmessers der Installationsöffnung. In einem Ausführungsbeispiel ist vorgesehen, dass sich der Wurzelbereich in dieser Richtung über etwa 1/3 des Durchmessers der Installationsöffnung erstreckt. Neben diesem Wurzelbereich ist die Öffnungshandhabe mit der Weichkunststoffmembran zusätzlich über zumindest einen Steg verbunden. Dieser befindet sich außerhalb des Wurzelbereiches und verbindet die Öffnungshandhabe mit der Weichkunststoffmembran somit auch von dem Wurzelbereich beabstandet. Dieser Steg erstreckt sich ausgehend von dem Wurzelbereich bis in den Randbereich des dem Wurzelbereich gegenüberliegenden Randbereiches der Installationsöffnung.

Das definierte Entfernen der Weichkunststoffmembran von der Installationsöffnung oder das Ausreißen zumindest des Bereiches der Weichkunststoffmembran, mit der diese die Installationsöffnung überspannt, erfolgt sehr definiert, der Kontur der Installationsöffnung folgend, auch deswegen, da diese an entgegengesetzten Stellen, bezogen auf den Durchmesser der Installationsöffnung in entgegengesetzte Richtungen entfernt bzw. eingerissen wird.

Durch diese Auslegung der außenseitigen Öffnungshandhabe, die mit der Weichkunststoffmembran zusammen urgeformt worden ist, erfolgt eine Krafteinleitung, wenn die Öffnungslasche ergriffen und in radialer Richtung von dem Dosenkörper der Installationsdose wegbewegt wird, zielgerichtet in den durch die Materialansammlung steiferen Wurzelbereich und damit in das dem freien Ende der Öffnungslasche gegenüberliegende Ende der Öffnungshandhabe - einerseits - und über den zumindest einen Steg definiert auch in den Bereich der Weichkunststoffmembran, die dem Wurzelbereich in Bezug auf den Durchmesser der Installationsöffnung gegenüberliegt. Erreicht wird hiermit, dass bei einer Aufreißbewegung, bei der die Öffnungshandhabe mit ihrer Öffnungslasche in radialer Richtung von dem Dosenkörper nach außen weggezogen wird, die Weichkunststoffmembran an zwei gegenüberliegenden Stellen bezogen auf den Umfang der Installationsöffnung eingerissen wird. Dabei wird die Weichkunststoffmembran in ihrem an den Wurzelbereich grenzenden Randbereich auf Grund des steiferen Wurzelbereiches der Kontur der Installationsöffnung folgend eingerissen. Dabei wirkt der Wurzelbereich als Drehkörper, durch den die Weichkunststoffmembran nach innen ins Doseninnere hinein bestrebt ist einzureißen. Die Anbindung der Öffnungshandhabe mit zumindest einem Steg auch mit Abstand zum Wurzelbereich hat zur Folge, dass an dem dem Wurzelbereich gegenüberliegenden Randbereich der Weichkunststoffmembran diese nach außen und damit vom Dosenkörper weggerichtet einreißt oder vom Dosenkörper abgetrennt wird. Durch den Wurzelbereich und den zumindest einen Steg sind somit die initialen Einrissstellen sehr genau definiert. Ausgehend von diesen pflanzt sich der Einriss entlang der Kontur der Installationsöffnung fort, vor allem bewirkt dadurch, dass der Wurzelrandbereich hinsichtlich seiner Geometrie der Kontur der Installationsöffnung folgt. Dieser Rand des Wurzelbereiches erstreckt sich bis in den Randbereich der Weichkunststoffmembran. Dabei kann vorgesehen sein, dass der Wurzelbereich mit einem in diese Richtung ausgedünnten Ende unmittelbar an das die Installationsöffnung einfassende Material des Dosenkörpers angeschlossen ist. Durchaus möglich ist es auch, dass der Wurzelbereich mit einem kleinen Abstand zu dem physischen Rand der Weichkunststoffmembran bzw. des Bereiches derselben endet, mit dem die Installationsöffnung überspannt ist. Begünstigt werden kann das Einreißen benachbart zu dem Wurzelrandbereich durch Vorsehen einer Einreißkontur, beispielsweise bereitgestellt durch eine Materialausdünnung.

Bei dem die Öffnungshandhabe mit der Weichkunststoffmembran außerhalb des Wurzelbereiches verbindenden Steg handelt es sich gemäß einem bevorzugten Ausführungsbeispiel um einen Mittelsteg. Dieser ist in Bezug auf die Breite der Öffnungshandhabe in der Mitte oder etwa in der Mitte derselben angeordnet. Ein solcher Mittelsteg ist typischerweise an den Wurzelbereich angeformt, erstreckt sich mithin von diesem bis zum gegenüberliegenden Abschluss derselben. Durch den Mittelsteg ist die Öffnungshandhabe versteift. Die Öffnungslasche ist bei einer solchen Auslegung derjenige Abschnitt, der nicht mehr an die Weichkunststoffmembran über einen solchen Steg angeformt ist.

Eine weitere Versteifung der aus dem Weichkunststoffmaterial bestehenden Öffnungshandhabe kann dadurch erreicht werden, dass die Öffnungshandhabe U-förmig profiliert ist, wobei die Seitenschenkel zum Dosenkörper hinweisen. Bei einer solchen Auslegung der Öffnungshandhabe sind die Seitenschenkel der U-förmigen Profilierung in demjenigen Abschnitt der Öffnungshandhabe, in der diese die Weichkunststoffmembran überdecken, an diese angeformt. Bei einer solchen Ausgestaltung können die beiden Seitenschenkel den geforderten, zumindest einen Steg bilden. Als besonders vorteilhaft wird angesehen, wenn zusätzlich zu den beiden, zumindest abschnittsweise an die Weichkunststoffmembran angeformten Seitenschenkeln einer solchen U-förmigen Öffnungshandhabe ebenfalls ein Mittelsteg vorgesehen ist. Auf diese Weise werden zwei benachbart zueinander angeordnete Eintauchkonturen zum Einsetzen eines Öffnungswerkzeuges, beispielsweise eines Schlitzschraubendrehers bereitgestellt. Ein in eine solche Eintauchkontur eingesetztes Öffnungswerkzeug, mit dem durch eine in radialer Richtung von dem Dosenkörper weg gerichteten Bewegungsrichtung ebenso wie durch Ergreifen der Öffnungslasche die Weichkunststoffmembran von der Installationsöffnung entfernt werden soll, bewirkt eine außermittige Krafteinleitung in Bezug auf die Breite der Öffnungshandhabe und den Wurzelbereich. Hierdurch wird eine Einreißkraft in ein Segment des Wurzelbereiches eingekoppelt, so dass der Wurzelbereich bei einer kreisförmigen Kontur der Installationsöffnung nicht im Bereich des Scheitels des Wurzelbereiches einzureißen beginnt, sondern benachbart dazu. Dieses begünstigt ein definiertes Einreißen, wobei durch die größere Steifigkeit des Wurzelbereiches Sorge dafür getragen ist, dass sich der Riss auch entlang des zu einer Seite hin längeren Einreißweges entlang der Kontur der Installationsöffnung problemlos ausbreitet.

Um die Öffnungslasche bzw. die Öffnungshandhabe manuell besser ergreifen zu können, ist in einem Ausführungsbeispiel vorgesehen, dass an dieser außenseitig Griffkonturen angeformt sind, beispielsweise durch mehrere quer zur Längserstreckung der Öffnungshandhabe verlaufende Wülste. Es versteht sich, dass an Stelle von derartigen Wülsten auch andere Griffstrukturen, die bei einem manuellen Ergreifen der Öffnungslasche ein Abrutschen verhindern sollen, eingesetzt werden können.

In einer Weiterbildung ist vorgesehen, dass an die Weichkunststoffmembran auch innenseitig eine Öffnungshandhabe angeformt ist. Diese dient zum Öffnen oder Entfernen der Weichkunststoffmembran von einer Installationsöffnung vom Doseninneren her. Diese Öffnungshandhabe erlaubt es, den durch die Weichkunststoffmembran bereitgestellten Verschluss einer solchen Installationsöffnung auch dann problemlos entfernen zu können, wenn die Installationsdose bereits montiert und mit elektrischen/elektronischen Komponenten bestückt ist.

Die Öffnungshandhabe ist ausgelegt, manuell und/oder mittels eines Werkzeuges, beispielsweise der Klinge eines Schlitzschraubendrehers geöffnet zu werden, indem über die Öffnungshandhabe auf die Weichkunststoffmembran Kräfte wirken, damit diese zum Durchschieben der Verbindungsrohrstückes geöffnet oder von dem Dosenkörper vollständig entfernt werden kann.

Besonders vorteilhaft ist eine Ausgestaltung, bei der die innenseitige Öffnungshandhabe eine Eintauchkontur aufweist. Die Eintauchkontur dient zur Aufnahme eines Werkzeuges, beispielsweise des Endes der Klinge eines Schlitzschraubendrehers, sodass dann mit dem in die Eintauchkontur eingesetzten Werkzeug die die Installationsöffnung verschließende Weichkunststoffmembran geöffnet und insgesamt entfernt werden kann. Von Vorteil einer solchermaßen ausgelegten Öffnungshandhabe ist, dass diese mit einem Werkzeug, wie beispielsweise einem Schraubendreher leicht erreichbar ist und mit diesem auch größere Kräfte zum Öffnen oder Entfernen der Weichkunststoffmembran zum Freilegen der Installationsöffnung aufgebracht werden können. Dieses gilt nicht nur in Bezug auf die mit einem solchen Werkzeug anlegbare Kraft von ihrer Höhe her, sondern auch in Bezug auf die Kraftrichtung. Mit einem beispielsweise als Schraubendreher ausgelegten Werkzeug kann über die Eintauchkontur der Öffnungshandhabe beispielsweise auch eine drehende Kraft auf die Weichkunststoffmembran aufgebracht werden, sodann mit sukzessivem Drehen an den in Drehrichtung weisenden Anschlussbereichen der Weichkunststoffmembran an den Dosenkörper hohe Kräfte zum Einreißen derselben oder zum Lösen derselben von dem Dosenkörper aufbringbar sind. Neben drehenden Kräften können auch Hebelkräfte eingebracht werden, wenn ein solches Werkzeug beispielsweise auf dem die Montageöffnung einfassenden Rand des Dosenkörpers abgestützt ist. Je nach Ausgestaltung des Dosenkörpers ist es auch möglich, eine solche Weichkunststoffmembran von der Installationsöffnung durch eine Drückbewegung des Werkzeuges in Richtung zum Boden des Dosenkörpers zu entfernen. Von besonderem Vorteil bei einem solchen Werkzeug ist, dass es sich hierbei um ein Werkzeug handeln kann, welches von einem Installateur regelmäßig mitgeführt wird. Des Weiteren stören in der Installationsdose bereits verbaute elektrische/elektronische Komponenten das wandnahe Einschieben eines solchen Werkzeuges zum Erreichen der Eintauchkontur nicht.

Gemäß einer Ausgestaltung einer solchen Eintauchkontur ist diese schlitzartig ausgeführt, um das Ende der Klinge eines Schlitzschraubendrehers darin einführen zu können und diese dann drehmomentschlüssig in der Eintauchkontur aufgenommen ist. Damit eine solche Öffnungshandhabe mit Eintauchkontur nur eine möglichst geringe Einbautiefe in Richtung zum Dosenkörperinneren hat, ist einer Ausführung einer solchen schlitzförmigen Eintauchkontur vorgesehen, dass die Erstreckung des Schlitzes parallel zur flächigen Erstreckung der Weichkunststoffmembran verläuft und somit quer zur Tiefe der Eintauchkontur.

Eine solche Eintauchkontur kann von einem Flächenabschnitt der Weichkunststoffmembran an einer Seite eingefasst sein. Diesem Flächenabschnitt zum Dosenkörperinneren und zumindest bereichsweise von diesem Flächenabschnitt beanstandet, befindet sich typischerweise eine Frontplatte. Diese ist mittels zweier Seitenteile mit der Weichkunststoffmembran verbunden. Sämtliche Bestandteile sind typischerweise einstückig mit der Weichkunststoffmembran hergestellt und aus demselben Material. Die Eintauchkontur ist bei dieser Ausgestaltung von dem Flächenabschnitt der Weichkunststoffmembran, der Frontplatte und den beiden Seitenteilen eingefasst. Die Frontplatte kann mit ihrem unteren Ende in den Flächenabschnitt der Weichkunststoffmembran übergehen. Der Übergang der Frontplatte in die Weichkunststoffmembran erfolgt vorzugsweise über einen gewissen Abschnitt in Bezug auf die durch die Weichkunststoffmembran überspannte Installationsöffnung, beispielsweise 20 bis 30 % des Installations-öffnungsdurchmessers. Insofern ist auch die auf der Innenseite der Weichkunststoffmembran angeformte Öffnungshandhabe über einen Wurzelabschnitt mit der vorgenannten Erstreckung an die Weichkunststoffmembran angeformt. Dieses bewirkt dieselbe Hebelwirkung auf die Weichkunststoffmembran und das definierte Aufreißen, wie dieses vorstehend zu der außenseitigen Öffnungshandhabe ausgeführt ist. Die Eintauchkontur ist dann unterseitig verschlossen. In einer anderen Ausgestaltung ist vorgesehen, dass die Eintauchkontur durchgängig ist, mithin die Eintauchkontur unterseitig nicht an den Flächenabschnitt der Weichkunststoffmembran angeformt ist. Dann ist die Frontplatte nur über die beiden Seitenteile mit dem Flächenabschnitt der Weichkunststoffmembran verbunden. Bei einem Hebeln beim Abstützen des in die Eintauchkontur eingesetzten Werkzeuges an dem die Montageöffnung des Dosenkörpers einfassenden Rand oder auch beim Drehen des Werkzeuges wirken die Kräfte vor allem auch auf die Frontplatte. Die Anbindung der Frontplatte über die beiden Seitenteile bewirkt eine Kraftkonzentration der auf die Frontplatte einwirkenden Kräfte auf den Flächenabschnitt der Weichkunststoffmembran. Dieses kann ein Ein- oder Abreißen der Weichkunststoffmembran begünstigen.

Die Erfindung ist nachfolgend anhand eines Ausführungsbeispiels unter Bezugnahme auf die beigefügten Figuren beschrieben. Es zeigen:
- **Fig. 1:**: Eine perspektivische Ansicht auf eine als Hohlwanddose ausgebildete Installationsdose mit Blickrichtung auf ihre Rückseite,
- **Fig. 2:**: einen vergrößerten Ausschnitt auf die Außenseite der Installationsdose der Figur 1 mit einer durch eine Weichkunststoffmembran verschlossenen Installationsöffnung und einer daran angeformten außenseitigen Öffnungshandhabe,
- **Fig. 3:**: eine Draufsicht auf den Ausschnitt der Installationsdose der Figur 2 von oben mit der außenseitigen Öffnungshandhabe,
- **Fig. 4:**: eine Längsschnittdarstellung durch die die Installationsöffnung überspannende Weichkunststoffmembran mit der außenseitig angeformten Öffnungshandhabe,
- **Fig. 5:**: eine Schnittdarstellung entsprechend derjenigen der Figur 4 in einer Weiterbildung, bei der die Weichkunststoffmembran auch innenseitig eine Öffnungshandhabe trägt, und
- **Fig. 6:**: eine Einsicht durch die Montageöffnung in die Installationsdose der Figur 1 im Bereich der von der Weichkunststoffmembran verschlossenen Installationsöffnung.

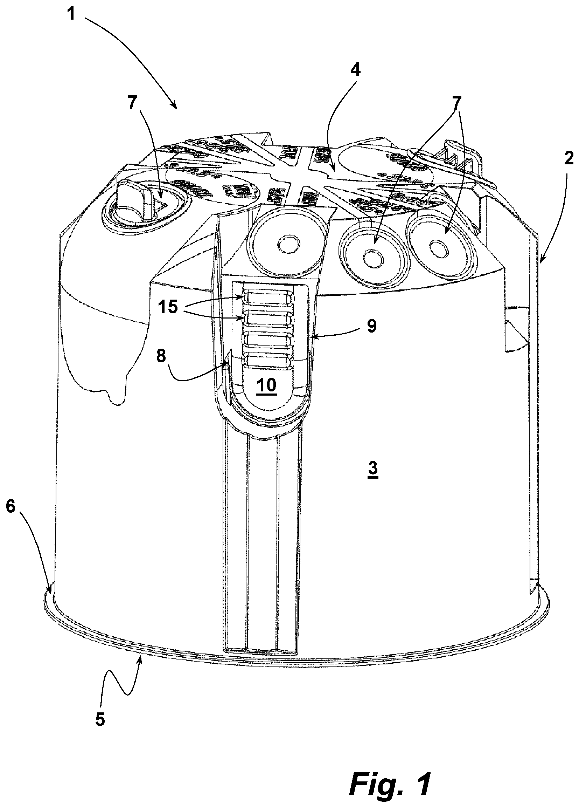

Eine Hohlwanddose 1 als beispielhafte Installationsdose zur Aufnahme von elektrischen/elektronischen Installationsgeräten, wie etwa einer Steckdose, eines Geräteträgers, einer Schalteinrichtung oder dergleichen umfasst einen Dosenkörper 2. Bei dem dargestellten Ausführungsbeispiel wird der Dosenkörper 2 durch eine umlaufende zylindrische Wand 3 und einen Boden 4 gebildet. Dem Boden 4 gegenüberliegend verfügt der Dosenkörper 2 über eine in Figur 1 auf Grund der Perspektive nicht erkennbare Montageöffnung 5, durch die die gewünschten Installationen in die Hohlwanddose 1 eingebracht werden können. An den Dosenkörper 2 ist, die Montageöffnung 5 einfassend, in radialer Richtung nach außen ein Stützflansch 6 angeformt. Der Dosenkörper 2, soweit vorstehend beschrieben, ist aus einem Hartkunststoff, typischerweise aus einem thermoplastischen Kunststoff hergestellt. Dieser stellt zugleich die notwendige elektrische Isolierung zwischen dem Innenraum des Dosenkörpers 2 und seiner Außenseite dar. Der Boden 4, wozu auch der geneigte, den Boden 4 mit der Seitenwand 3 verbindende Abschnitt zählt, verfügt über mehrere, als Durchbrechungen in den Dosenkörper 2 eingebrachte Rohreinführungen. Diese sind in Figur 1 nicht erkennbar, da jeweils von einer Weichkunststoffmembran überspannt. **In** Figur 1 sind nur einige der mehreren, eine Rohreinführung überspannenden Weichkunststoffmembranen mit dem Bezugszeichen 7 kenntlich gemacht. Aus herstellungstechnischen Gründen sind die Weichkunststoffmembranen 7 über Angusskanäle miteinander verbunden. Bei dem Weichkunststoff und den von diesem gebildeten Weichkunststoffmembranen 7 handelt es sich um einen elastomeren Weichkunststoff, wie dieser bei Installationsdosen der in Rede stehenden Art bekannt ist. Die Hohlwanddose 1 ist als Zweikomponentenspritzgussteil gefertigt. In einem ersten Schritt ist der aus Hartkunststoff bestehende Dosenkörper 2 urgeformt worden. In einem nachfolgenden Schritt ist die Weichkunststoffkomponente an den Dosenkörper 2 in einem entsprechenden Werkzeug angeformt worden.

Die Hohlwanddose 1 verfügt des Weiteren über Installationsöffnungen, die ebenso wie die vorbeschriebenen Rohreinführungen mit einer Weichkunststoffmembran 8 verschlossen sind. Die Installationsöffnungen dienen, wenn die Weichkunststoffmembran 8 entfernt ist, zum Einführen eines Verbindungsrohrstückes von der Doseninnenseite her zum Ausbilden eines Verbindungstunnels zu einer benachbart zu der Installationsdose 1 angeordneten zweiten Installationsdose. Die Installationsdose 1 des dargestellten Ausführungsbeispiels verfügt über zwei einander diametral gegenüberliegende Installationsöffnungen, die jeweils durch eine Weichkunststoffmembran 8 verschlossen sind. Die Installationsöffnungen befinden sich in einem ungekrümmten Wandabschnitt der Installationsdose 1, dessen Wandau-ßenseite parallel zur Längsachse der Installationsdose 1 verläuft. Eine solche Installationsdose kann durchaus auch mehrere, durch jeweils eine Weichkunststoffmembran verschlossene Installationsöffnungen aufweisen.

Um einen Verbindungstunnel zwischen der Installationsdose 1 und einer weiteren Installationsdose auszubilden, ist zuvor die Weichkunststoffmembran 8 zu entfernen, sodass ein den Verbindungstunnel bildendes Verbindungsrohrstück durch die dann offene Installationsöffnung hindurchgeschoben werden kann. Zu diesem Zweck trägt die Weichkunststoffmembran außenseitig eine Öffnungshandhabe 9. Diese dient zum erleichterten Entfernen der Weichkunststoffmembran 8, um die von dieser verschlossene Installationsöffnung zu öffnen.

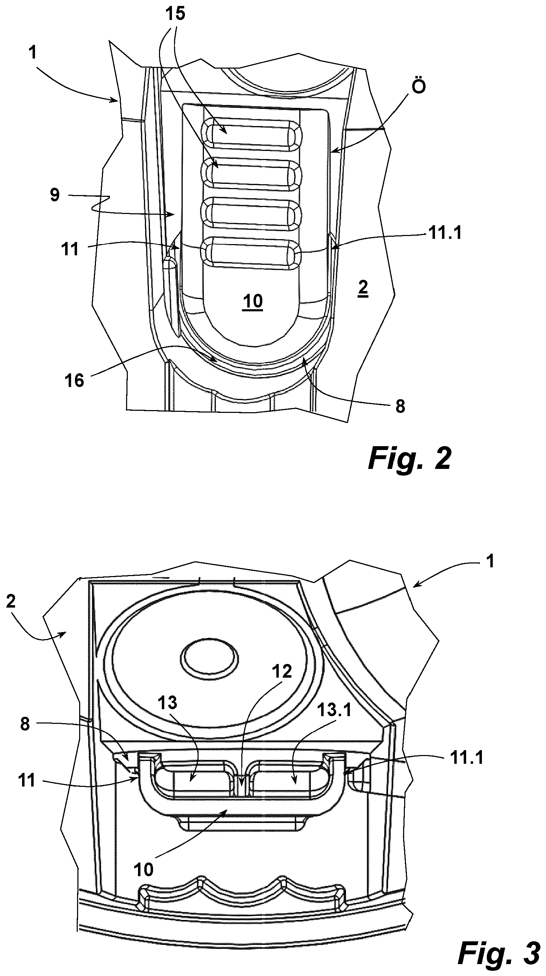

Figur 2 zeigt in einem Ausschnitt die als Hohlwanddose 1 ausgeführte Installationsdose 1 im Bereich der Weichkunststoffmembran 8 und der daran angeformten Öffnungshandhabe 9. Die Öffnungshandhabe 9 umfasst eine Frontplatte 10 mit daran seitlich angeformten Seitenschenkeln 11, 11.1 (siehe auch Figur 3). Die Schenkel 11, 11.1 erstrecken sich im Wesentlichen über die gesamte Länge der Öffnungshandhabe 9 in vertikaler Richtung in ihrer Darstellung gemäß Figur 2. Durch die an die Frontplatte 10 angeformten Seitenschenkel 23, 23.1 weist die Öffnungshandhabe eine U-förmige Querschnittsgeometrie auf. Die Seitenschenkel 11, 11.1 sind an die Weichkunststoffmembran 8 angeformt, soweit diese sich über die Installationsöffnung erstreckt. Somit wird durch die Frontplatte 10 der Öffnungshandhabe 9 und ihren Seitenschenkeln 11, 11.1 zusammen mit der Weichkunststoffmembran 8 eine Eintauchkontur für ein Werkzeug bereitgestellt. Die Öffnungshandhabe 9 ist in demjenigen Abschnitt, in dem die Seitenschenkel 11, 11.1 nicht mehr an die Weichkunststoffmembran 8 angeformt sind als Öffnungslasche Ö zum manuellen Ergreifen derselben ausgeführt. Die sich auch in diesen Abschnitt - der Öffnungslasche Ö - der Öffnungshandhabe 9 erstreckenden Seitenschenkel 11, 11.1 verleihen der Öffnungshandhabe 9, die zusammen mit der Weichkunststoffmembran vorgeformt worden ist, eine gewisse Stabilität.

Zusätzlich zu den beiden Seitenschenkeln 11, 11.1 ist die Öffnungshandhabe 9 in demjenigen Abschnitt, in dem sich diese über die Weichkunststoffmembran 8 erstreckt, zusätzlich durch einen Mittelsteg 12 an die Weichkunststoffmembran 8 angeformt (siehe Figur 3). Durch den Mittelsteg 12 sind, wie aus Figur 3 erkennbar, zwei Eintauchkonturen 13, 13.1 zur Aufnahme eines Werkzeuges bereitgestellt. Soll die von der Weichkunststoffmembran 8 überspannte Installationsöffnung geöffnet werden, kann dieses manuell durch Ergreifen der Öffnungslasche Ö oder durch einen Schlitzschraubendreher als Öffnungswerkzeug vorgenommen werden, der in die eine
oder die andere Eintauchkontur 13 oder 13.1 eingesetzt wird.

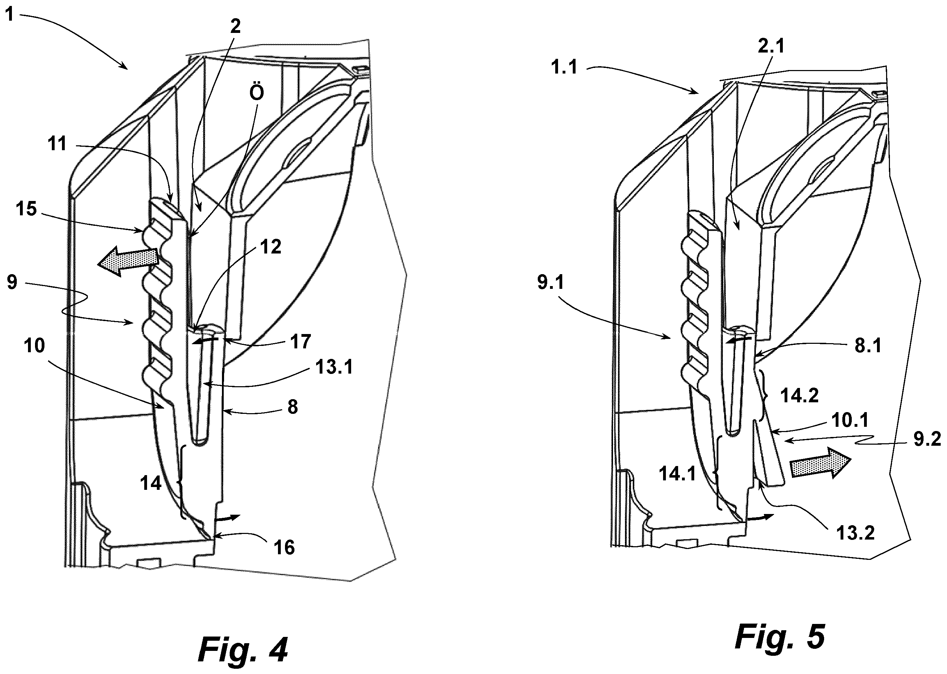

Von Besonderheit bei dem Anschluss der Öffnungshandhabe 9 an die Weichkunststoffmembran 8 ist, wie aus Figur 4 ersichtlich, dass beide Teile - die Öffnungshandhabe 9 und die Weichkunststoffmembran 8 - einen Wurzelbereich 14 bilden (siehe Figur 4). Der Wurzelbereich 14 erstreckt sich in Richtung der Längserstreckung der Öffnungshandhabe bei dem dargestellten Ausführungsbeispiel etwa über ein Drittel des Durchmessers der von der Weichkunststoffmembran 8 überspannten Installationsöffnung. Diese Materialverdickung verleiht der Weichkunststoffmembran 8 in dem Wurzelbereich 14 eine erhöhte Steifigkeit. In dem Wurzelbereich 14 geht somit die Öffnungshandhabe 9 in die Weichkunststoffmembran 8 über.

Um ein manuelles Öffnen der Installationsöffnung mittels der Öffnungshandhabe 9 zu erleichtern, trägt diese außenseitig eine durch querverlaufende Wülste 15 gebildete Griffkontur.

Zum Öffnen der Installationsöffnung des Dosenkörpers 2 durch Entfernen der die Installationsöffnung überspannenden Weichkunststoffmembran 8 wird die Öffnungshandhabe 9 in radialer Richtung vom Dosenkörper 2 weg, wie in Figur 4 durch den Blockpfeil angedeutet, bewegt, und zwar entweder manuell durch Ergreifen derselben oder durch Einführen eines Öffnungswerkzeuges in eine der beiden Eintauchkonturen 13, 13.1. Dieses bewirkt eine gezielte Krafteinleitung in den Wurzelbereich 14, der die über die Öffnungshandhabe 9 eingeleitete Kraft über seine Fläche verteilt und über seine Fläche an den Randbereich 16 der Weichkunststoffmembran 8 weiterleitet. Durch die Unterteilung des Abstandsraumes der Öffnungshandhabe 9 von der Weichkunststoffmembran 8 in zwei Eintauchkonturen 13, 13.1 ist der Ort der Anlage der Kraft definiert, da die Klinge eines Schraubendrehers in eine solche Eintauchkontur nahezu spielfrei eingesetzt werden kann. Ein Aufreißen der Weichkunststoffmembran 8 erfolgt somit besonders verlustarm. Dabei reagiert der auf Grund der Materialverdickung relativ steifere Wurzelbereich 14, da von dem handlichen Abschluss der Weichkunststoffmembran 8 beabstandet, als Drehpunkt. Durch die in die Öffnungshandhabe induzierte Öffnungsbewegung wird zugleich auf den Randbereich 17 der Weichkunststoffmembran 8, der dem Wurzelbereich 14 in Bezug auf die Durchmessererstreckung der Installationsöffnung gegenüberliegt, eine Zugkraft ausgeübt, so dass benachbart zu dem Wurzelbereich eine Druckkraft auf die Weichkunststoffmembran 8 und an der bezüglich des Durchmessers der Installationsöffnung gegenüberliegenden Seite eine Zugkraft ausgeübt wird, wie dieses in Figur 4 durch Pfeile angedeutet ist.

Der Wurzelbereich 14 erstreckt sich, wie auch durch die Kontur der Außenseite der Öffnungshandhabe 9 in Figur 2 erkennbar, der Kontur der Installationsöffnung folgend, bis in den Randbereich 16 der Weichkunststoffmembran 8. Die Weichkunststoffmembran 8 dünnt zu ihrem radialen Abschluss hin aus und ist mit ihrer Mantelfläche an die Innenwand der Installationsöffnung des Dosenkörpers 2 angeschlossen (siehe Figur 4). Diese unmittelbar zu dem Wurzelbereich 14 benachbarte Kontur dient als Solleinreißkontur. Die bei einem Öffnen der Öffnungshandhabe 9 durch Wegziehen der Öffnungslasche Ö von dem Dosenkörper 2 auf den Wurzelbereich 14 ausgeübte Kraft wirkt auf die Solleinreißkontur und löst diese von dem Rand der Installationsöffnung. Bereitgestellt wird diese bei dem dargestellten Ausführungsbeispiel durch den materialausgedünnten Randbereich 16, der den Wurzelbereich 14 in Richtung zu dem Rand der Installationsöffnung folgt. Die Mantelfläche des Randbereiches 16 der Weichkunststoffmembran 8 ist damit an eine innere Mantelfläche der Installationsöffnung angeschlossen. Der dem Randbereich 16 gegenüberliegende Randbereich 17 der Weichkunststoffmembran 8 ist hingegen an die Außenseite des Dosenkörpers 2 angeschlossen.

Figur 5 zeigt in einer Teillängsschnittdarstellung entsprechend derjenigen der Figur 4 eine Weiterbildung einer Installationsdose, wie vorbeschrieben. Diese Installationsdose 1.1 ist aufgebaut und konzipiert wie die Installationsdose 1. Daher gelten die zu der Installationsdose 1 vorstehenden Ausführungen gleichermaßen für die Installationsdose 1.1. Weitergebildet ist die Installationsdose 1.1 dadurch, dass die Kunststoffmembran 8.1 neben ihrer außenseitigen Öffnungshandhabe 9.1 auch innenseitig eine Öffnungshandhabe 9.2 trägt. Diese ist von der Weichkunststoffmembran 8.1 in die entgegengesetzte Richtung wie die Öffnungshandhabe 9.1 von dieser ausgerichtet, damit in die durch die Öffnungshandhabe 9.2 bereitgestellte Eintauchkontur 13.2 ein Werkzeug, beispielsweise ein Schlitzschraubendreher aus Richtung der Montageöffnung des Dosenkörpers 2.1 darin eingesetzt werden kann. Auch die Öffnungshandhabe 9.2 ist an die Weichkunststoffmembran 8.1 angeformt und zusammen mit dieser urgeformt. Die Öffnungshandhabe 9.2 ist ebenso wie die Öffnungshandhabe 9.1 durch eine Frontplatte und zwei die Frontplatte 10.1 mit der Kunststoffmembran 8.1 verbindende Seitenschenkel 18, 18.1 aufgebaut. Die Öffnungshandhabe 9.2 dient zum Öffnen der Installationsöffnung des Dosenkörpers 2.1 von innen, etwa wenn die Installationsöffnung erst dann geöffnet werden soll, wenn die Hohlwanddose 1.1 bereits wandseitig eingebaut ist.

Die zum Doseninneren abragende Öffnungshandhabe 9.2 ist ebenfalls unter Ausbildung eines Wurzelbereiches 14.2 an die Weichkunststoffmembran 8.1 angeformt. Damit bildet dieser auch zum Öffnen der Installationsöffnung mittels der innenseitig abragenden Öffnungshandhabe 9.2 ein wirksames Widerlager, an dem ein in die Eintauchkontur 13.2 eingesetztes Öffnungswerkzeug, etwa ein Schlitzschraubendreher beim Ausüben einer in radialer Richtung zum Doseninneren gerichteten Bewegung abgestützt ist. Damit wird auch bei einem Öffnen der Installationsöffnung mittels der innenseitigen Öffnungshandhabe 9.2 ebenso wie dieses zu der außenseitigen Öffnungshandhabe 9 beschrieben ist eine Einreißkraft im unteren Randbereich der Weichkunststoffmembran 8.1 ins Doseninnere hinein und in dem gegenüberliegenden Randbereich von dem Dosenkörper 2.1 weggerichtet in die Weichkunststoffmembran 9.1 eingeleitet, so dass auch bei dieser Benutzung ein definiertes Ein- und Ausreißen der Weichkunststoffmembran 8.1 erfolgt. Damit bildet der durch die Materialansammlung steifere Wurzelbereich 14.2 ebenfalls einen Drehpunkt, um die an gegenüberliegenden Randbereichen in entgegengesetzte Richtungen wirkende Einreißkraft bereitzustellen.

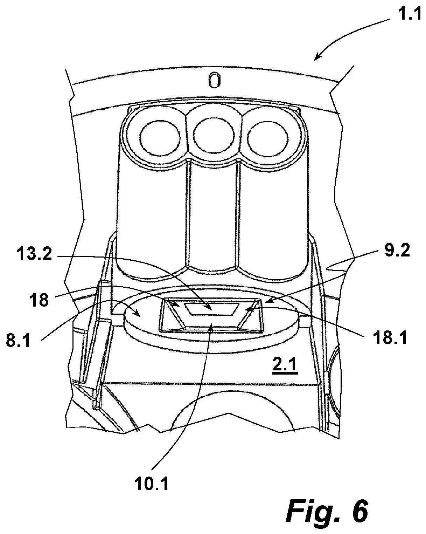

Figur 6 zeigt eine Teileinsicht in die Montageöffnung des Dosenkörpers 2.1 der Hohlwanddose 1.1 mit der Weichkunststoffmembran 8.1, von der Innenseite her gesehen und der daran angeformten innenseitigen Öffnungshandhabe 9.2.

Die Erfindung ist anhand von Ausführungsbeispielen beschrieben. Ohne den Umfang der geltenden Ansprüche zu verlassen, ergeben sich für einen Fachmann zahlreiche weitere Ausgestaltungen, die Erfindung im Rahmen der geltenden Ansprüche umzusetzen, ohne dass dieses im Einzelnen näher im Rahmen dieser Ausführungen dargelegt werden müsste.

### Bezugszeichenliste

- 1, 1.1: Hohlwanddose
- 2, 2.1: Dosenkörper
- 3: Wand
- 4: Boden
- 5, 5.1: Montageöffnung
- 6: Stützflansch
- 7: Weichkunststoffmembran
- 8, 8.1: Weichkunststoffmembran
- 9, 9.1, 9.2: Öffnungshandhabe
- 10, 10.1: Frontplatte
- 11, 11.1: Seitenschenkel
- 12: Mittelsteg
- 13, 13.1, 13.2: Eintauchkontur
- 14, 14.1: Wurzelbereich
- 15: Wulst
- 16: Randbereich
- 17: Randbereich
- 18, 18.1: Seitenschenkel

- Ö: Öffnungslasche

## Patentansprüche

1. Installationsdose für elektrische und/oder elektronische Installationen mit einem zur Aufnahme zumindest einer elektrischen/elektronischen Komponente dienenden Dosenkörper (2, 2.1), umfassend einen Boden (2), eine umlaufende Wand (3) und eine Montageöffnung (5), welcher Dosenkörper (2, 2.1) wenigstens eine durch eine Weichkunststoffmembran (8, 8.1) verschlossene, in der Wand (3) oder falls vorhanden, einer Übergangsfläche zwischen der Wand (3) und dem Boden (4) befindliche Installationsöffnung aufweist, wobei an der nach außen weisenden Seite der Weichkunststoffmembran (8, 8.1) eine Öffnungshandhabe (9, 9.1) zum Öffnen oder Entfernen der die Installationsöffnung verschließenden Weichkunststoffmembran (8, 8.1) mit einer über die von der Weichkunststoffmembran (8, 8.1) überspannten Installationsöffnung hinausragenden Öffnungslasche (Ö) zum Ergreifen der Öffnungshandhabe (9, 9.1) angeformt ist, wobei die Öffnungshandhabe (9, 9.1) über einen in ihrem der Öffnungslasche (Ö) gegenüberliegenden Endabschnitt über ihre Breite zusammen mit der Weichkunststoffmembran (8, 8.1) außermittig zu dem die Installationsöffnung überspannenden Bereich der Weichkunststoffmembran (8, 8.1) angeordneten, außenseitig der Kontur der Installationsöffnung folgenden Wurzelbereich (14, 14.1) und über zumindest einen Steg (11, 11.1, 12) mit der Weichkunststoffmembran (8, 8.1) verbunden ist, **dadurch gekennzeichnet, dass** sich der zumindest eine Steg (11, 11.1, 12) ausgehend von dem Wurzelbereich (14, 14.1) bis in den Randbereich (17) des dem Wurzelbereich (14, 14.1) gegenüberliegenden Randbereiches der Installationsöffnung erstreckt.

2. Installationsdose nach Anspruch 1, **dadurch gekennzeichnet, dass** der zumindest eine Steg ein am Wurzelbereich (14, 14.1) angeformten Mittelsteg (12), angeordnet in der Mitte der Öffnungshandhabe (9, 9.1) bezogen auf ihre Breite, ist, der sich bis zu Öffnungslasche (O) erstreckt

3. Installationsdose nach einem der Ansprüche 1 oder 2, **dadurch gekennzeichnet, dass** die Öffnungshandhabe (9, 9.1) zumindest in ihrem über die Weichkunststoffmembran (8, 8.1) reichenden Abschnitt U-förmig profiliert ist und die Seitenschenkel (11, 11.1) in diesem Abschnitt in Richtung zur Weichkunststoffmembran weisen und in dem die Installationsöffnung überspannenden Bereich an die Weichkunststoffmembran angeformt sind.

4. Installationsdose nach Anspruch 2 und 3, **dadurch gekennzeichnet, dass** die Seitenschenkel (11, 11.1) der Öffnungshandhabe (9, 9.1) sich bis zum endseitigen Abschluss der Öffnungslasche (Ö) erstrecken und dadurch zwei benachbart zueinander angeordnete Eintauchkonturen (13, 13.1) zum Einsetzen eines Öffnungswerkzeuges gebildet sind.

5. Installationsdose nach einem der Ansprüche 1 bis 4, **dadurch gekennzeichnet, dass** sich in Längserstreckung der Öffnungshandhabe (9, 9.1) der Wurzelbereich (14) zumindest über 20 % bis 25 % des von der Weichkunststoffmembran (8, 8.1) überspannten Durchmessers der Installationsöffnung erstreckt.

6. Installationsdose nach einem der Ansprüche 1 bis 5, **dadurch gekennzeichnet, dass** die Öffnungshandhabe zumindest im Bereich ihrer Öffnungslasche (Ö) außenseitig eine Griffkontur aufweist.

7. Installationsdose nach Anspruch 6, **dadurch gekennzeichnet, dass** die Griffkontur durch mehrere quer zur Längserstreckung der Öffnungshandhabe verlaufende Wülste (15) gebildet ist.

8. Installationsdose nach einem der Ansprüche 1 bis 7, **dadurch gekennzeichnet, dass** der an den Wurzelbereich (14) grenzende Randbereich (16) der Weichkunststoffmembran (8, 8.1) als Solleinreißkontur ausgeführt ist.

9. Installationsdose nach Anspruch 8, **dadurch gekennzeichnet, dass** die Solleinreißkontur durch eine geringere Materialstärke der Weichkunststoffmembran (8, 8.1) bereitgestellt ist.

10. Installationsdose nach Anspruch 9, **dadurch gekennzeichnet, dass** die Weichkunststoffmembran (8, 8.1) im Bereich des Wurzelbereiches (14) mit der Mantelfläche der Solleinreißkontur der Weichkunststoffmembran (8, 8.1) an den Dosenkörper (2, 2.1) angeschlossen ist.

11. Installationsdose nach einem der Ansprüche 1 bis 10, **dadurch gekennzeichnet, dass** auch an der zur Doseninnenseite weisenden Seite der Weichkunststoffmembran (8.1) eine Öffnungshandhabe (9.2) zum Öffnen oder Entfernen der Weichkunststoffmembran (8.1) vom Doseninneren her angeformt ist.

12. Installationsdose nach Anspruch 11, **dadurch gekennzeichnet, dass** die Öffnungshandhabe (9.2) eine Eintauchkontur (13.2) mit einer zur Montageöffnung des Dosenkörpers (2.1) weisenden Werkzeugaufnahmeöffnung zur Aufnahme eines Werkzeuges zum Öffnen oder Entfernen der Weichkunststoffmembran (8.1) aufweist.

13. Installationsdose nach Anspruch 12, **dadurch gekennzeichnet, dass** die Eintauchkontur (13.2) schlitzförmig ausgeführt ist, wobei die Erstreckung des Schlitzes quer zur Tiefe der Eintauchkontur (13.2) und parallel zur flächigen Erstreckung der Weichkunststoffmembran (8.1) verläuft.

14. Installationsdose nach Anspruch 12 oder 13, **dadurch gekennzeichnet, dass** die Eintauchkontur (13.2) von einem Flächenabschnitt der Weichkunststoffmembran (8.1), eine von diesem Flächenabschnitt beanstandete Frontplatte (10.1) und zwei die Frontplatte (10.1) mit dem Flächenabschnitt verbindenden Seitenschenkeln (18, 18.1) eingefasst ist.

## Claims

1. An installation box for electrical and/or electronic installations with a box body (2, 2.1) serving to accommodate at least one electrical/electronic component, comprising a base (2), a surrounding wall (3) and a mounting opening (5), the box body (2, 2.1) having at least one installation opening located in the wall (3) or, if present, in a transition surface between the wall (3) and the base (4), which is closed by a soft plastic membrane (8, 8.1), wherein an opening handle (9, 9.1) for opening or removing the soft plastic membrane (8, 8.1) closing the installation opening is formed on the outwardly facing side of the soft plastic membrane (8, 8.1), with an opening tab (Ö) projecting beyond the installation opening spanned by the soft plastic membrane (8, 8.1) for grasping the opening handle (9, 9.1), wherein the opening handle (9, 9.1) is connected to the soft plastic membrane (8, 8.1) via a root region (14, 14.1) arranged, together with the soft plastic membrane (8, 8.1), across its width, in an end section opposite the opening tab (Ö), eccentrically relative to the region of the soft plastic membrane (8, 8.1) spanning the installation opening and following the contour of the installation opening, and via at least one web (11, 11.1, 12), **characterized in that** the at least one web (11, 11.1, 12) extends from the root region (14, 14.1) to the edge region (17) of the edge region of the installation opening opposite the root region (14, 14.1).

2. The installation box according to claim 1, **characterized in that** the at least one web is a central web (12) formed on the root region (14, 14.1), arranged in the middle of the opening handle (9, 9.1) with respect to its width, which extends to the opening tab (O).

3. The installation box according to any one of claims 1 or 2, **characterized in that** the opening handle (9, 9.1) has a U-shaped profile at least in its section extending over the soft plastic membrane (8, 8.1) and the side legs (11, 11.1) in this section point towards the soft plastic membrane and are formed on the soft plastic membrane in the region spanning the installation opening.

4. The installation box according to claim 2 and 3, **characterized in that** the side legs (11, 11.1) of the opening handle (9, 9.1) extend to the end termination of the opening tab (Ö) and thereby form two adjacent immersion contours (13, 13.1) for inserting an opening tool.

5. The installation box according to any one of claims 1 to 4, **characterized in that** the root region (14) extends in the longitudinal extent of the opening handle (9, 9.1) over at least 20% to 25% of the diameter of the installation opening spanned by the soft plastic membrane (8, 8.1).

6. The installation box according to any one of claims 1 to 5, **characterized in that** the opening handle has a grip contour on the outside at least in the region of its opening tab (Ö).

7. The installation box according to claim 6, **characterized in that** the handle contour is formed by several ridges (15) extending transversely to the longitudinal extent of the opening handle.

8. The installation box according to any one of claims 1 to 7, **characterized in that** the edge region (16) of the soft plastic membrane (8, 8.1) adjoining the root region (14) is designed as a programmed tear contour.

9. The installation box according to claim 8, **characterized in that** the programmed tear contour is provided by a reduced material thickness of the soft plastic membrane (8, 8.1).

10. The installation box according to claim 9, **characterized in that** the soft plastic membrane (8, 8.1) is connected to the box body (2, 2.1) in the region of the root region (14) with the outer surface of the programmed tear contour of the soft plastic membrane (8, 8.1).

11. The installation box according to any one of claims 1 to 10, **characterized in that** an opening handle (9.2) for opening or removing the soft plastic membrane (8.1) from inside the box is also formed on the side of the soft plastic membrane (8.1) facing the inside of the box.

12. The installation box according to claim 11, **characterized in that** the opening handle (9.2) has an immersion contour (13.2) with a tool receiving opening pointing towards the mounting opening of the box body (2.1) for receiving a tool for opening or removing the soft plastic membrane (8.1).

13. The installation box according to claim 12, **characterized in that** the immersion contour (13.2) is designed in a slot-shaped manner, wherein the extent of the slot runs transversely to the depth of the immersion contour (13.2) and parallel to the planar extent of the soft plastic membrane (8.1).

14. The installation box according to claim 12 or 13, **characterized in that** the immersion contour (13.2) is enclosed by a surface section of the soft plastic membrane (8.1), a front plate (10.1) supported by this surface section and two side legs (18, 18.1) connecting the front plate (10.1) with the surface section.

## Revendications

1. Boîtier d'installation pour installations électriques et/ou électroniques, comportant un corps de boîtier (2, 2.1) destiné à accueillir au moins un composant électrique/électronique, comprenant un fond (2), une paroi périphérique (3) et une ouverture de montage (5), lequel corps de boîte (2, 2.1) présente au moins une ouverture d'installation fermée par une membrane en plastique souple (8, 8.1), située dans la paroi (3) ou, le cas échéant, dans une surface de transition entre la paroi (3) et le fond (4), dans lequel une poignée d'ouverture (9, 9.1) est formée sur la face extérieure de la membrane en plastique souple (8, 8.1) afin d'ouvrir ou de retirer la membrane en plastique souple (8, 8.1) qui ferme l'ouverture d'installation, avec une languette d'ouverture (Ö) dépassant de l'ouverture d'installation recouverte par la membrane en plastique souple (8, 8.1) et permettant de saisir la poignée d'ouverture (9, 9.1), dans lequel la poignée d'ouverture (9, 9.1) est disposée, par l'intermédiaire d'une partie d'extrémité opposée à la languette d'ouverture (O), sur toute sa largeur conjointement avec la membrane en plastique souple (8, 8.1), de manière excentrée par rapport à la zone de la membrane en plastique souple qui recouvre l'ouverture d'installation (8, 8.1), et reliée, au niveau d'une zone de racine (14, 14.1) suivant extérieurement le contour de l'ouverture d'installation, et au moins par une nervure (11, 11.1, 12), à la membrane en plastique souple (8, 8.1), **caractérisée en ce que** l'au moins une nervure (11, 11.1, 12) s'étend à partir de la zone de racine (14, 14.1) jusqu'à la zone de bord (17) de la zone de bord de l'ouverture d'installation opposée à la zone de racine (14, 14.1).

2. Boîtier d'installation selon la revendication 1, **caractérisé en ce que** l'au moins une toile est une toile centrale (12) formée sur la zone racine (14, 14.1), disposée au milieu de la poignée d'ouverture (9, 9.1) par rapport à sa largeur, qui s'étend jusqu'à la languette d'ouverture (Ö).

3. Boîtier d'installation selon l'une quelconque des revendications 1 ou 2, **caractérisé en ce que** la poignée d'ouverture (9, 9.1) est profilée en forme de U dans au moins sa section s'étendant au-dessus de la membrane en plastique souple (8, 8.1) et que les pieds latéraux (11, 11.1) dans cette section pointent vers la membrane en plastique souple et sont formés sur la membrane en plastique souple dans la zone couvrant l'ouverture d'installation.

4. Boîtier d'installation selon les revendications 2 et 3, **caractérisé en ce que** les pattes latérales (11, 11.1) de la poignée d'ouverture (9, 9.1) s'étendent jusqu'à l'extrémité de la languette d'ouverture (Ö) et forment ainsi deux contours d'immersion adjacents (13, 13.1) pour l'insertion d'un outil d'ouverture.

5. Boîtier d'installation selon l'une quelconque des revendications 1 à 4, **caractérisé en ce que** la zone de racine (14) s'étend dans l'étendue longitudinale de la poignée d'ouverture (9, 9.1) sur au moins 20 % à 25 % du diamètre de l'ouverture d'installation couverte par la membrane en plastique souple (8, 8.1).

6. Boîtier d'installation selon l'une quelconque des revendications 1 à 5, **caractérisé en ce que** la poignée d'ouverture présente un contour de prise à l'extérieur au moins dans la zone de sa languette d'ouverture (Ö).

7. Boîtier d'installation selon la revendication 6, **caractérisé en ce que** le contour de la poignée est formé par plusieurs crêtes (15) s'étendant transversalement à l'étendue longitudinale de la poignée d'ouverture.

8. Boîtier d'installation selon l'une quelconque des revendications 1 à 7, **caractérisé en ce que** la zone périphérique (16) de la membrane en plastique souple (8, 8.1) bordant la zone de racine (14) est conçue comme un contour de déchirure.

9. Boîtier d'installation selon la revendication 8, **caractérisé en ce que** le contour de déchirure est mis à disposition par une épaisseur de matériau réduite de la membrane en plastique souple (8, 8.1).

10. Boîtier d'installation selon la revendication 9, **caractérisé en ce que** la membrane en plastique souple (8, 8.1) est reliée au corps du boîtier (2, 2.1) dans la zone de racine (14) avec la surface extérieure du contour de déchirure prévu de la membrane plastique souple (8, 8.1).

11. Boîtier d'installation selon l'une quelconque des revendications 1 à 10, **caractérisé en ce qu'**une poignée d'ouverture (9.2) pour ouvrir ou retirer la membrane en plastique souple (8.1) de l'intérieur du boîtier est également formée sur le côté de la membrane en plastique souple (8.1) faisant face à l'intérieur du boîtier.

12. Boîtier d'installation selon la revendication 11, **caractérisé en ce que** la poignée d'ouverture (9.2) a un contour d'immersion (13.2) avec une ouverture de réception d'outil pointant vers l'ouverture de montage du corps du boîtier (2.1) pour recevoir un outil permettant d'ouvrir ou de retirer la membrane en plastique souple (8.1).

13. Boîtier d'installation selon la revendication 12, **caractérisé en ce que** le contour d'immersion (13.2) est conçu de manière à former une fente, dans lequel l'étendue de la fente s'étend transversalement à la profondeur du contour d'immersion (13.2) et parallèlement à l'étendue plane de la membrane en plastique souple (8.1).

14. Boîtier d'installation selon la revendication 12 ou 13, **caractérisé en ce que** le contour d'immersion (13.2) est entouré par une section de surface de la membrane en plastique souple (8.1), une plaque avant (10.1) supportée par cette section de surface et deux pieds latéraux (18, 18.1) reliant la plaque avant (10.1) à la section de surface.
